# EUROPEAN PATENT SPECIFICATION

(11) **EP 3 223 575 B1**
(45) Date of publication and mention of the grant of the patent: **12.06.2019**
(21) Application number: 16199500.6
(22) Date of filing: 18.11.2016
(51) Int. Cl.: H04W 76/10, H04W 48/02, H04W 72/12, H04W 76/20, H04W 88/06, H04W 92/10, H04W 92/18, H04W 4/06, H04B 1/3822, H04W 72/04

(54) **METHODS AND APPARATUS FOR SWITCHING COMMUNICATION INTERFACE IN A WIRELESS COMMUNICATION SYSTEM**
VERFAHREN UND VORRICHTUNG ZUR SCHALTUNG EINER KOMMUNIKATIONSSCHNITTSTELLE IN EINEM DRAHTLOSKOMMUNIKATIONSSYSTEM
PROCÉDÉS ET APPAREIL POUR COMMUTER UNE INTERFACE DE COMMUNICATION DANS UN SYSTÈME DE COMMUNICATIONS SANS FIL

(30) Priority: 19.11.2015 US 201562257358 P
(43) Date of publication of application: 27.09.2017
(73) Proprietor: ASUSTek Computer Inc., Taipei City 112 (TW)
(72) Inventor: CHEN, Wei-Yu, 112 Taipei City (TW); OU, Meng-Hui, 112 Taipei City (TW); PAN, Li-Te, 112 Taipei City (TW); LI, Ming-Che, 112 Taipei City (TW)
(74) Representative: Hoefer & Partner Patentanwälte mbB

(56) References cited:
- EP-A1- 2 884 783
- EP-A1- 3 122 148
- WO-A1-2014/177222
- WO-A1-2015/142242
- US-A1- 2014 073 344
- CATT: "Discussion on PC5/Uu transport for V2I/N services", 3GPP DRAFT; R3-152471, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Anaheim, USA; 20151116 - 20151120 6 November 2015 (2015-11-06), XP051026376, Retrieved from the Internet: URL:http://www.3gpp.org/ftp/tsg_ran/WG3_Iu /TSGR3_90/Docs/ [retrieved on 2015-11-06]
- NOKIA NETWORKS: "Considerations of V2X implications to RAN operation", 3GPP DRAFT; R2-154147-V2X, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 25 September 2015 (2015-09-25), XP051023486, Retrieved from the Internet: URL:http://www.3gpp.org/ftp/tsg_ran/WG2_RL 2/TSGR2_91bis/Docs/ [retrieved on 2015-09-25]
- "Proposed TP for updates of TR 36.885", 3GPP DRAFT; R2-156515 PROPOSED TP UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, CA, USA; 20151116 - 20151120 16 November 2015 (2015-11-16), XP051005917, Retrieved from the Internet: URL:http://www.3gpp.org/ftp/Meetings_3GPP_ SYNC/RAN2/Docs/ [retrieved on 2015-11-16]
- PANASONIC: "Traffic switching and Coming back to Uu from PC5", 3GPP DRAFT; R2-156196 TRAFFIC SWITCHING AND COMING BACK TO UU FROM PC5, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Anaheim (CA), USA; 20151116 - 20151120 6 November 2015 (2015-11-06), XP051024466, Retrieved from the Internet: URL:http://www.3gpp.org/ftp/tsg_ran/WG2_RL 2/TSGR2_92/Docs/ [retrieved on 2015-11-06]

## Description

This disclosure generally relates to wireless communication networks, and more particularly, to a method and apparatus for switching communication interface in a wireless communication system. In particular, the present invention relates to methods of a user equipment to transmit data according to the pre-characterizing parts of independent claims 1 and 2. 3GPP document R3-152471 discloses the possibility of using Uu or PC5 interfaces according to specific transmission cases for the infrastructure and the sidelink connections. Further, the present invention relates to a corresponding user equipment according to the pre-characterizing part of independent claim 10.

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure is an Evolved Universal Terrestrial Radio Access Network (E-UTRAN). The E-UTRAN system can provide high data throughput in order to realize the above-noted voice over IP and multimedia services. A new radio technology for the next generation (e.g., 5G) is currently being discussed by the 3GPP standards organization. Accordingly, changes to the current body of 3GPP standard are currently being submitted and considered to evolve and finalize the 3GPP standard.

Methods and apparatus for switching communication interface in a wireless communication system are disclosed and defined in independent claims 1, 2 and 10.

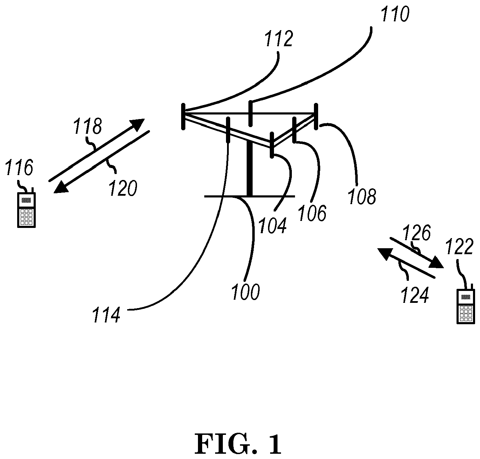

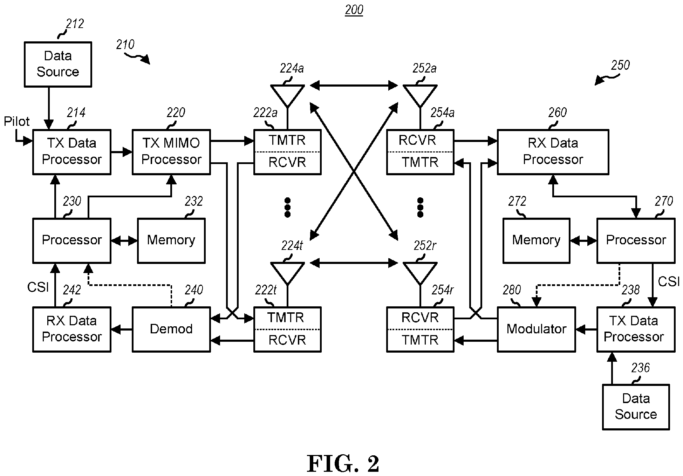

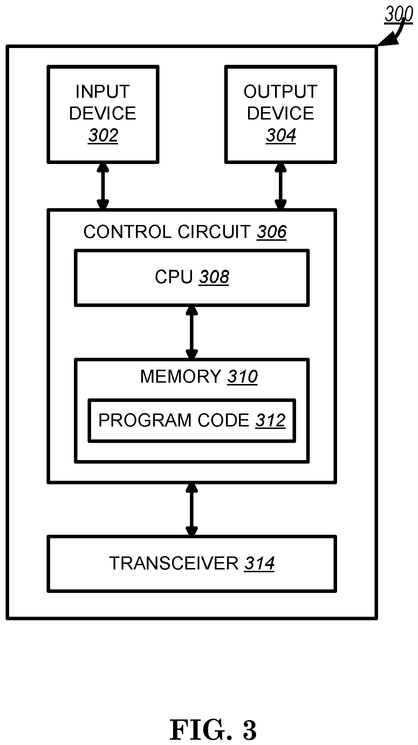

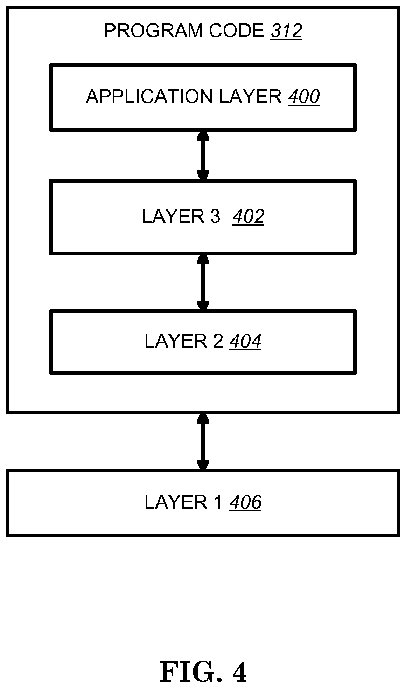

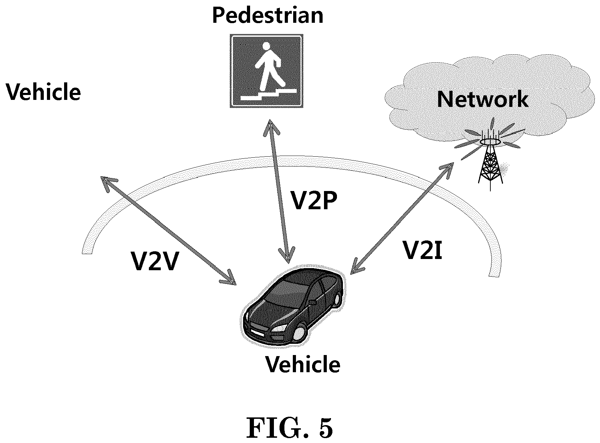

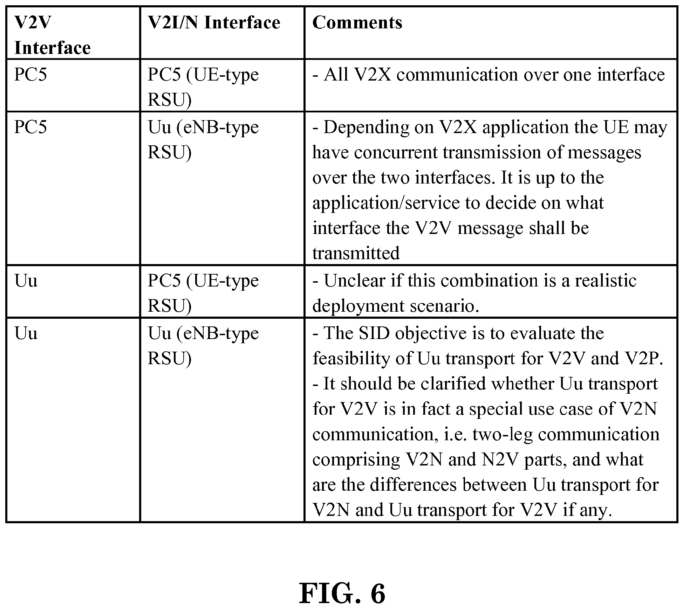

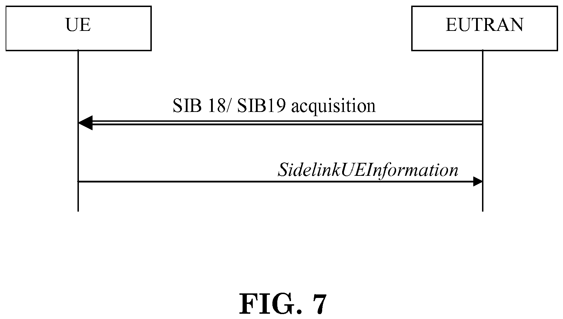

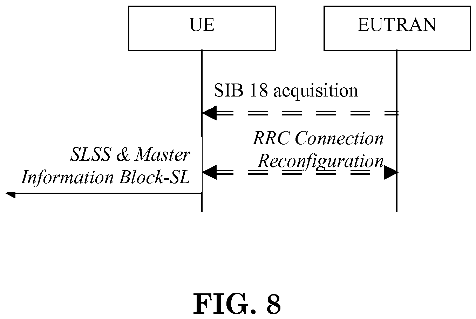

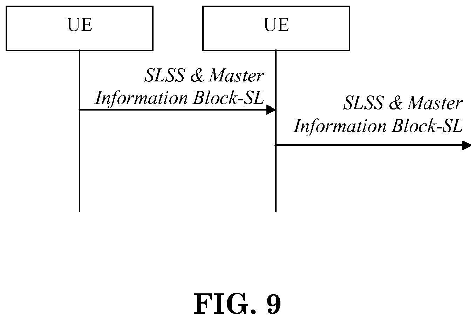

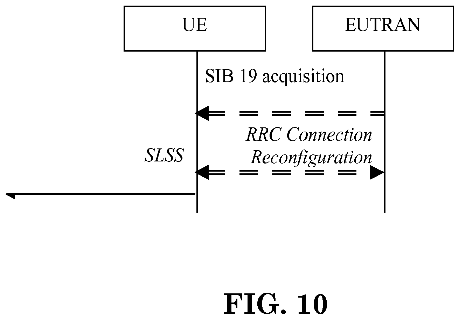

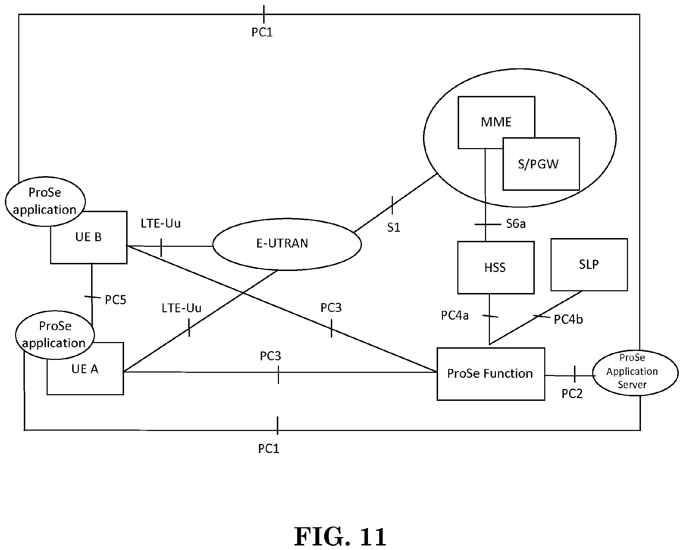

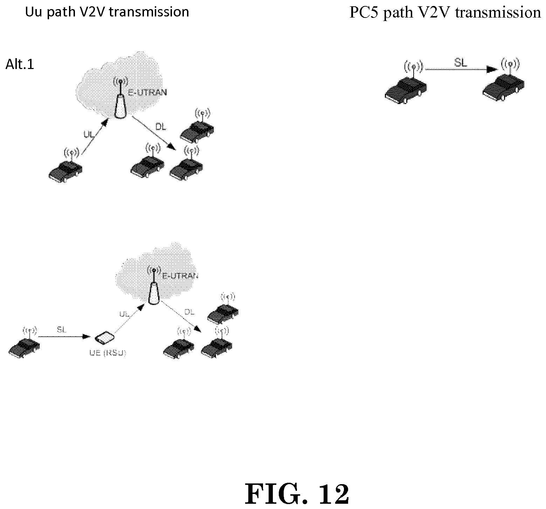

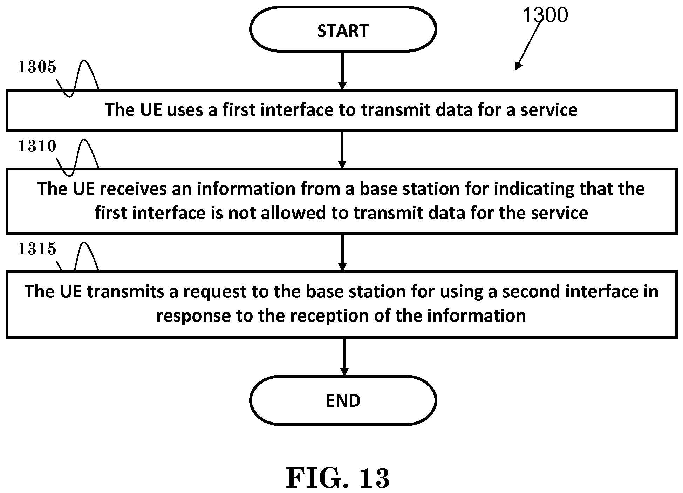

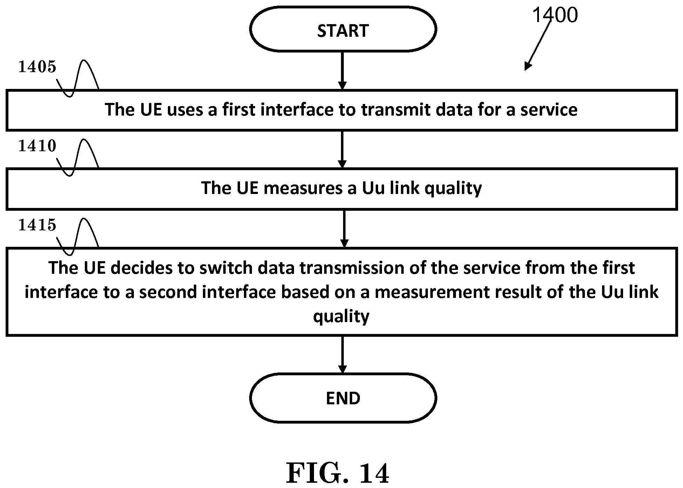

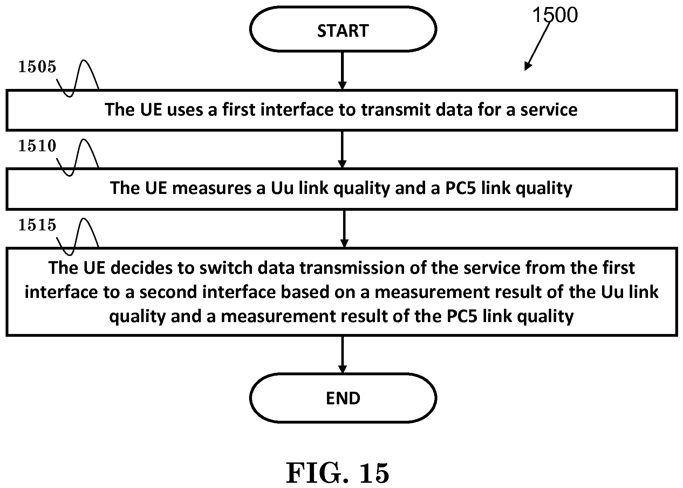

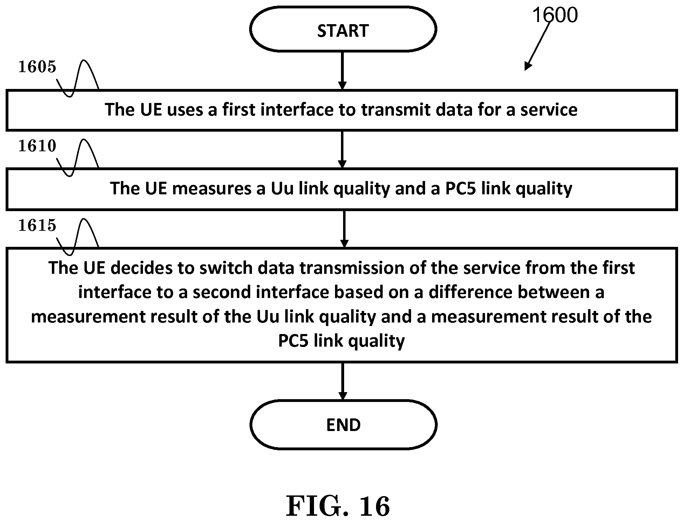

In the following, preferred embodiments of the present invention are disclosed with reference to the enclosed figures. Herein:FIG. 1 shows a diagram of a wireless communication system according to one exemplary embodiment.FIG. 2 is a block diagram of a transmitter system (also known as access network) and a receiver system (also known as user equipment or UE) according to one exemplary embodiment.FIG. 3 is a functional block diagram of a communication system according to one exemplary embodiment.FIG. 4 is a functional block diagram of the program code of FIG. 3 according to one exemplary embodiment.FIG. 5 is a reproduction of Figure 4.1-1 of 3GPP TR 22.885 V1.0.0.FIG. 6 is a reproduction of Table 2 of 3GPP R2-154147.FIG. 7 is a reproduction of Figure 5.10.2-1 of 3GPP 36.331 V12.7.0.FIG. 8 is a reproduction of Figure 5.10.7.1-1 of 3GPP 36.331 V12.7.0.FIG. 9 is a reproduction of Figure 5.10.7.1-2 of 3GPP 36.331 V12.7.0.FIG. 10 is a reproduction of Figure 5.10.7.1-3 of 3GPP 36.331 V12.7.0.FIG. 11 is a reproduction of Figure 4.2-1 of 3GPP TS 23.303 V13.1.1.FIG. 12 is a diagram according to one exemplary embodiment.FIG. 13 is a flow chart according to one exemplary embodiment.FIG. 14 is a flow chart according to one exemplary embodiment.FIG. 15 is a flow chart according to one exemplary embodiment.FIG. 16 is a flow chart according to one exemplary embodiment.

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including: RP-151109, "New SI proposal: Feasibility Study on LTE-based V2X Services", LG Electronics, CATT, Vodafone, Huawei; TR 22.885 V1.0.0, "Study on LTE Support for V2X Services"; R2-154147, "Considerations of V2X implications to RAN operation", Nokia Networks; TS 36.321 V12.7.0, "E-UTRA Medium Access Control (MAC) protocol specification"; TS 36.331 V12.7.0, "Radio Resource Control (RRC) Protocol specification"; R2-154891, "Report of the LTE break-out session (ProSe, eDRX, V2X, LATRED)", Interdigital; TR 22.803 V12.2.0, "Feasibility study for Proximity Services (ProSe)"; and TS 23.303 V13.1.1, "Proximity-based services (ProSe)".

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

Preferably, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP RP-151109 describes the justification of the LTE V2X study item as follows:

### 3 Justification

The pace of LTE network deployment is accelerating all over the world, which enables more and more advanced services and Internet applications making use of the inherent benefits of LTE, such as higher data rate, lower latency and enhanced coverage. Widely deployed LTE-based network provides the opportunity for the vehicle industry to realize the concept of 'connected cars'. By providing a vehicle with an access to the LTE network a vehicle can be connected to the Internet and other vehicles so that a broad range of existing or new services can be envisaged. Vehicle manufacturers and cellular network operators show strong interests in vehicle wireless communications for proximity safety services as well as commercial applications.

LTE-based V2X study is urgently desired from market requirement, and the market for V2V communication in particular is time sensitive. There are many research projects and field tests of connected vehicles in some countries or regions, such as US/Europe/Japan/korea. In China, CCSA has finished the feasible study for vehicle safety application based on TD-LTE in 2014 and began the series of industrial standard of communication based on LTE for vehicle application. Further, in March 2015, the frequency study of V2X also started in CCSA and some vehicular industrial alliances in china. Based on the study, National Regulatory Authority in China will allocate the frequency of connected vehicles.

In order to respond to this situation, SA1#69 recently agreed a new Rel-14 study on LTE support for V2X services to investigate the essential use cases and requirements for the following (S1-150284/SP-150051):
- V2V (vehicle-to-vehicle): covering LTE-based communication between vehicles.
- V2P (vehicle-to-pedestrian): covering LTE-based communication between a vehicle and a device carried by an individual (e.g. handheld terminal carried by a pedestrian, cyclist, driver or passenger).
- V2I/N (vehicle-to-infrastructure/network): covering LTE-based communication between a vehicle and a roadside unit/network. A roadside unit (RSU) is a transportation infrastructure entity (e.g. an entity transmitting speed notifications) implemented in an eNodeB or a stationary UE.

The SA1 study considers both safety services and non-safety services and the possibility of using existing LTE technologies for unicast/multicast/broadcast communication.

Furthermore, RAN#66 sent a LS to SA1 (RP-142312) on possibility of vehicular services by adapting Rel-12 D2D specifications. The intention of this LS from RAN was to ask SA1 for requirements to allow study and work on vehicular services possibly even in Rel-13. SA1 responded to this LS in RP-150557/S1-151629 which contains the interim outcome of the SA1 study. Meanwhile, it is necessary to establish the evaluation methodology for feasibility of LTE-based V2X. RAN1 study done in the past showed that defining an evaluation methodology could consume some meeting cycles. Considering that RAN1 has not performed evaluations focusing on vehicular communications so far, an early start of this feasibility study will be beneficial for timely completion of the related specification works.

3GPP TR 22.885 clearly defines different kinds of V2X (Vehicle-to-Everything) services and possible use cases as follows:

### 3.1 Definitions

For the purposes of the present document, the terms and definitions given in TR 21.905 [1] and the following apply.

A term defined in the present document takes precedence over the definition of the same term, if any, in TR 21.905 [1].
**Road Side Unit:** an entity supporting V2I Service that can transmit to, and receive from a UE using V2I application. RSU is implemented in an eNodeB or a stationary UE.
**V2I Service:** a type of V2X Service, where one party is a UE and the other party is an RSU both using V2I application.
**V2N Service:** a type of V2X Service, where one party is a UE and the other party is a serving entity, both supporting V2N applications and communicating with each other via LTE network entities.
Editor's Note: Definition of V2N Service may need to be further discussed.
**V2P Service:** a type of V2X Service, where both parties of the communication are UEs using V2P application.
**V2V Service:** a type of V2X Service, where both parties of the communication are UEs using V2V application.
**V2X Service:** a type of communication service that involves a transmitting or receiving UE using V2V application via 3GPP transport. Based on the other party involved in the communication, it can be further divided into V2V Service, V2I Service, V2P Service, and V2N Service.

### 4 Overview

### 4.1 Types of V2X

The vehicular communication in this study, referred to as Vehicle-to-Everything (V2X), contains the following three different types:
- Vehicle-to-Vehicle (V2V) Communications
- Vehicle-to-Infrastructure (V2I) Communications
- Vehicle-to-Pedestrian (V2P) Communications

### [Figure 4.1-1 of 3GPP TR 22.885 V1.0.0 is reproduced as FIG. 5]

- Note: These three types of V2X can use "co-operative awareness" to provide more intelligent services for end-users. This means that transport entities, such as vehicles, roadside infrastructure, and pedestrians, can collect knowledge of their local environment (e.g., information received from other vehicles or sensor equipment in proximity) to process and share that knowledge in order to provide more intelligent services, such as cooperative collision warning or autonomous driving.

Three basic classes of applications for providing ITS services: road safety, traffic efficiency, and other applications can be found in e.g., [2],[3].

### 4.2 Vehicle-to-Vehicle (V2V)

E-UTRAN allows such UEs that are in proximity of each other to exchange V2V-related information using E-UTRA(N) when permission, authorisation and proximity criteria are fulfilled. The proximity criteria can be configured by the MNO. However, UEs supporting V2V Service can exchange such information when served by or not served by E-UTRAN.

The UE supporting V2V applications transmits application layer information (e.g. about its location, dynamics, and attributes as part of the V2V Service). The V2V payload must be flexible in order to accommodate different information contents, and the information can be transmitted periodically according to a configuration provided by the MNO. V2V is predominantly broadcast-based; V2V includes the exchange of V2V-related application information between distinct UEs directly and/or, due to the limited direct communication range of V2V, the exchange of V2V-related application information between distinct UEs via infrastructure, e.g., RSU.

### 4.3 Vehicle-to-Infrastructure (V2I)

The UE supporting V2I applications sends application layer information to RSU. RSU sends application layer information to a group of UEs or a UE supporting V2I applications. V2N is also introduced where one party is a UE and the other party is a serving entity, both supporting V2N applications and communicating with each other via LTE network.

### 4.4 Vehicle-to-Pedestrian (V2P)

E-UTRAN allows such UEs that are in proximity of each other to exchange V2P-related information using E-UTRAN when permission, authorisation and proximity criteria are fulfilled. The proximity criteria can be configured by the MNO. However, UEs supporting V2P Service can exchange such information even when not served by E-UTRAN.

The UE supporting V2P applications transmits application layer information. Such information can be transmitted either by a vehicle with UE supporting V2X Service (e.g., warning to pedestrian), or by a pedestrian with UE supporting V2X Service (e.g., warning to vehicle). V2P includes the exchange of V2P-related application information between distinct UEs (one for vehicle and the other for pedestrian) directly and/or, due to the limited direct communication range of V2P, the exchange of V2P-related application information between distinct UEs via infrastructure, e.g., RSU.

3GPP R2-154147 mentions that depending on V2X application, a UE (User Equipment) may have concurrent transmission of messages over PC5 and Uu interfaces. And it is up to the application/service to decide on what interface the message shall be transmitted.

As the V2V (Vehicle-to-Vehicle) communication may be supported over PC5 and Uu and the V2I/N communication can also be supported over the same interfaces, the UE may be required to transmit and receive V2V messages concurrently on the interfaces as shown in the table of FIG. 6. Furthermore, it should be discussed when and how the PC5 and Uu interfaces can be used concurrently by a vehicular UE.

3GPP R2-154891 captures the agreement made for LTE V2X study item. It was agreed that two following possible scenarios for a UE to transmit V2V messages should be studied:

| |
|---|
| Agreements: |
| RAN2 agrees to consider the following V2V scenarios for feasibility study |
| 1. UL to DL via E-UTRAN (eNB and RSU eNB type) - higher priority for analysis study until december |
| 2. SL to UL via UE type RSU and DL from E-UTRAN (bi-directional will also be included). |
| - For the purpose of the initial evaluation we assume Rel-12 PC5 broadcast between UE and UE type RSU and Rel-12 Uu between UE type RSU and eNB |
| Multiple operator scenarios will be considered. For the initial analysis a single eNB and multiple eNBs are assumed. FFS which multiple operator scenarios are relevant and should be prioritized. |

3GPP TS 36.321 describes sidelink related behaviors in MAC layer as follows:

### 5.14 SL-SCH Data transfer

### 5.14.1 SL-SCH Data transmission

### 5.14.1.1 SL Grant reception and SCI transmission

In order to transmit on the SL-SCH the MAC entity must have a sidelink grant. The sidelink grant is selected as follows:
- if the MAC entity is configured to receive a sidelink grant dynamically on the PDCCH and more data is available in STCH than can be transmitted in the current SC period, the MAC entity shall:
   - using the received sidelink grant determine the set of subframes in which transmission of SCI and transmission of first transport block occur according to subclause 14.2.1 of [2];
   - consider the received sidelink grant to be a configured sidelink grant occurring in those subframes starting at the beginning of the first available SC Period which starts at least 4 subframes after the subframe in which the sidelink grant was received, overwriting a previously configured sidelink grant occurring in the same SC period, if available;
   - clear the configured sidelink grant at the end of the corresponding SC Period;
- else, if the MAC entity is configured by upper layers to transmit using a pool of resources as indicated in subclause 5.10.4 of [8] and more data is available in STCH than can be transmitted in the current SC period and if the MAC entity does not have a configured sidelink grant, the MAC entity shall:
   - randomly select the time and frequency resources for SL-SCH and SCI of a sidelink grant from the resource pool configured by upper layers. The random function shall be such that each of the allowed selections [2] can be chosen with equal probability;
   - use the selected sidelink grant to determine the set of subframes in which transmission of SCI and transmission of first transport block occur according to subclause 14.2.1 of [2];
   - consider the selected sidelink grant to be a configured sidelink grant occurring in those subframes starting at the beginning of the first available SC Period which starts at least 4 subframes after the subframe in which the sidelink grant was selected;
   - clear the configured sidelink grant at the end of the corresponding SC Period;
      NOTE: Retransmissions on SL-SCH cannot occur after the configured sidelink grant has been cleared.

The MAC entity shall for each subframe:
- if the MAC entity has a configured sidelink grant occurring in this subframe:
   - if the configured sidelink grant corresponds to transmission of SCI:
      - instruct the physical layer to transmit SCI corresponding to the configured sidelink grant.
   - else if the configured sidelink grant corresponds to transmission of first transport block:
      - deliver the configured sidelink grant and the associated HARQ information to the Sidelink HARQ Entity for this subframe.

### 5.14.1.2 Sidelink HARQ operation

### 5.14.1.2.1 Sidelink HARQ Entity

There is one Sidelink HARQ Entity at the MAC entity for transmission on SL-SCH, which maintains one Sidelink process.

For each subframe of the SL-SCH the Sidelink HARQ Entity shall:
- if a sidelink grant has been indicated for the Sidelink process and there is SL data, for sidelink logical channels of ProSe destination associated with the current SC period, available for transmission:
   - obtain the MAC PDU from the "Multiplexing and assembly" entity;
   - deliver the MAC PDU and the sidelink grant and the HARQ information to the Sidelink process;
   - instruct the Sidelink process to trigger a new transmission.
- else, if this subframe corresponds to retransmission opportunity for the Sidelink process:
   - instruct the Sidelink process to trigger a retransmission.
      - NOTE: The resources for retransmission opportunities are specified in subclause 14.2.1 of [2].

### 5.14.1.2.2 Sidelink process

The Sidelink process is associated with a HARQ buffer.

The sequence of redundancy versions is 0, 2, 3, 1. The variable CURRENT_IRV is an index into the sequence of redundancy versions. This variable is updated modulo 4. New transmissions and retransmissions for a given SC period are performed on the resource indicated in the sidelink grant and with the MCS configured by upper layers (if configured).

If the Sidelink HARQ Entity requests a new transmission, the Sidelink process shall:
- set CURRENT_IRV to 0;
- store the MAC PDU in the associated HARQ buffer;
- store the sidelink grant received from the Sidelink HARQ Entity;
- generate a transmission as described below.

If the Sidelink HARQ Entity requests a retransmission, the Sidelink process shall:
- generate a transmission as described below.

To generate a transmission, the Sidelink process shall:
- if there is no uplink transmission or if the MAC entity is able to perform uplink transmissions and transmissions on SL-SCH simultaneously at the time of the transmission:
   - instruct the physical layer to generate a transmission according to the stored sidelink grant with the redundancy version corresponding to the CURRENT_IRV value.
- increment CURRENT_IRV by 1.

### 5.14.1.3 Multiplexing and assembly

For PDU(s) associated with one SCI, MAC shall consider only logical channels with the same Source Layer-2 ID-Destination Layer-2 ID pair.

### 5.14.1.3.1 Logical channel prioritization

The Logical Channel Prioritization procedure is applied when a new transmission is performed.

The UE shall perform the following Logical Channel Prioritization procedure when a new transmission is performed:
- the UE shall allocate resources to the sidelink logical channels according to the following rules:
   - the UE should not segment an RLC SDU (or partially transmitted SDU) if the whole SDU (or partially transmitted SDU) fits into the remaining resources;
   - if the UE segments an RLC SDU from the sidelink logical channel, it shall maximize the size of the segment to fill the grant as much as possible;
   - the UE should maximise the transmission of data;
   - if the MAC entity is given an sidelink grant size that is equal to or larger than 10 bytes while having data available for transmission, the MAC entity shall not transmit only padding.
      - NOTE: The rules above imply that the order by which the sidelink logical channels are served is left for UE implementation.

### 5.14.1.3.2 Multiplexing of MAC SDUs

The MAC entity shall multiplex MAC SDUs in a MAC PDU according to subclauses 5.14.1.3.1 and 6.1.6.

### 5.14.1.4 Buffer Status Reporting

The sidelink Buffer Status reporting procedure is used to provide the serving eNB with information about the amount of sidelink data available for transmission in the SL buffers associated with the MAC entity. RRC controls BSR reporting for the sidelink by configuring the two timers *periodic-BSR-TimerSL* and *retx-BSR-TimerSL.* Each sidelink logical channel is allocated to an LCG with LCG ID set to "11"[8] and belongs to a ProSe Destination. A sidelink Buffer Status Report (BSR) shall be triggered if any of the following events occur:
- if the MAC entity has a configured SL-RNTI:
   - SL data, for a sidelink logical channel of a ProSe Destination, becomes available for transmission in the RLC entity or in the PDCP entity (the definition of what data shall be considered as available for transmission is specified in [3] and [4] respectively) and there is currently no data available for transmission for any of the sidelink logical channels belonging to the same ProSe Destination, in which case the Sidelink BSR is referred below to as "Regular Sidelink BSR";
   - UL resources are allocated and number of padding bits remaining after a Padding BSR has been triggered is equal to or larger than the size of the Sidelink BSR MAC control element containing the buffer status for at least one ProSe Destination plus its subheader, in which case the Sidelink BSR is referred below to as "Padding Sidelink BSR";
   - *retx-BSR-TimerSL* expires and the MAC entity has data available for transmission for any of the sidelink logical channels, in which case the Sidelink BSR is referred below to as "Regular Sidelink BSR";
   - *periodic-BSR-TimerSL* expires, in which case the Sidelink BSR is referred below to as "Periodic Sidelink BSR";
- else:
   - An SL-RNTI is configured by upper layers and SL data is available for transmission in the RLC entity or in the PDCP entity (the definition of what data shall be considered as available for transmission is specified in [3] and [4] respectively), in which case the Sidelink BSR is referred below to as "Regular Sidelink BSR".

For Regular and Periodic Sidelink BSR:
- if the number of bits in the UL grant is equal to or larger than the size of a Sidelink BSR containing buffer status for all ProSe Destinations having data available for transmission plus its subheader:
   - report Sidelink BSR containing buffer status for all ProSe Destinations having data available for transmission;
- else report Truncated Sidelink BSR containing buffer status for as many ProSe Destinations having data available for transmission as possible, taking the number of bits in the UL grant into consideration.

For Padding Sidelink BSR:
- if the number of padding bits remaining after a Padding BSR has been triggered is equal to or larger than the size of a Sidelink BSR containing buffer status for all ProSe Destinations having data available for transmission plus its subheader:
   - report Sidelink BSR containing buffer status for all ProSe Destinations having data available for transmission;
- else report Truncated Sidelink BSR containing buffer status for as many ProSe Destinations having data available for transmission as possible, taking the number of bits in the UL grant into consideration.

If the Buffer Status reporting procedure determines that at least one Sidelink BSR has been triggered and not cancelled:
- if the MAC entity has UL resources allocated for new transmission for this TTI and the allocated UL resources can accommodate a Sidelink BSR MAC control element plus its subheader as a result of logical channel prioritization:
   - instruct the Multiplexing and Assembly procedure to generate the Sidelink BSR MAC control element(s);
   - start or restart *periodic-BSR-TimerSL* except when all the generated Sidelink BSRs are Truncated Sidelink BSRs;
   - start or restart *retx-BSR-TimerSL;*
- else if a Regular Sidelink BSR has been triggered:
   - if an uplink grant is not configured:
      - a Scheduling Request shall be triggered.

A MAC PDU shall contain at most one Sidelink BSR MAC control element, even when multiple events trigger a Sidelink BSR by the time a Sidelink BSR can be transmitted in which case the Regular Sidelink BSR and the Periodic Sidelink BSR shall have precedence over the padding Sidelink BSR.

The MAC entity shall restart *retx-BSR-TimerSL* upon reception of an SL grant.

All triggered regular Sidelink BSRs shall be cancelled in case the remaining configured SL grant(s) valid for this SC Period can accommodate all pending data available for transmission. All triggered Sidelink BSRs shall be cancelled in case the MAC entity has no data available for transmission for any of the sidelink logical channels. All triggered Sidelink BSRs shall be cancelled when a Sidelink BSR (except for Truncated Sidelink BSR) is included in a MAC PDU for transmission. All triggered Sidelink BSRs shall be cancelled, and *retx-BSR-TimerSL* and *periodic-BSR-TimerSL* shall be stopped, when upper layers configure autonomous resource selection. The MAC entity shall transmit at most one Regular/Periodic Sidelink BSR in a TTI. If the MAC entity is requested to transmit multiple MAC PDUs in a TTI, it may include a padding Sidelink BSR in any of the MAC PDUs which do not contain a Regular/Periodic Sidelink BSR.

All Sidelink BSRs transmitted in a TTI always reflect the buffer status after all MAC PDUs have been built for this TTI. Each ProSe Destination shall report at the most one buffer status value per TTI and this value shall be reported in all Sidelink BSRs reporting buffer status for this ProSe Destination.
- NOTE: A Padding Sidelink BSR is not allowed to cancel a triggered Regular/Periodic Sidelink BSR. A Padding Sidelink BSR is triggered for a specific MAC PDU only and the trigger is cancelled when this MAC PDU has been built.

### 5.14.2 SL-SCH Data reception

### 5.14.2.1 SCI reception

SCI transmitted on the PSCCH indicate if there is a transmission on SL-SCH and provide the relevant HARQ information.

The MAC entity shall:
- for each subframe during which the MAC entity monitors PSCCH:
   - if SCI for this subframe has been received on the PSCCH with a Group Destination ID of interest to this MAC entity:
      - determine the set of subframes in which reception of the first transport blocks occur according to subclause 14.2.2 of [2] using the received SCI;
      - store the SCI and associated HARQ information as SCI valid for the subframes corresponding to first transmission of each transport block;
   - for each subframe for which the MAC entity has a valid SCI:
      - deliver the SCI and the associated HARQ information to the Sidelink HARQ Entity.

### 5.14.2.2 Sidelink HARQ operation

### 5.14.2.2.1 Sidelink HARQ Entity

There is one Sidelink HARQ Entity at the MAC entity for reception of the SL-SCH which maintains a number of parallel Sidelink processes. Each Sidelink process is associated with SCI in which the MAC entity is interested as determined by the Group Destination ID of the SCI. The Sidelink HARQ Entity directs HARQ information and associated TBs received on the SL-SCH to the corresponding Sidelink processes.

The number of Receiving Sidelink processes associated with the Sidelink HARQ Entity is defined in [8].

For each subframe of the SL-SCH, the Sidelink HARQ Entity shall:
- for each SCI valid in this subframe:
   - allocate the TB received from the physical layer and the associated HARQ information to a Sidelink process, associate this Sidelink process with this SCI and consider this transmission to be a new transmission.
- for each Sidelink process:
   - if this subframe corresponds to retransmission opportunity for the Sidelink process according to its associated SCI:
      - allocate the TB received from the physical layer and the associated HARQ information to the Sidelink process and consider this transmission to be a retransmission.

### 5.14.2.2.2 Sidelink process

For each subframe where a transmission takes place for the Sidelink process, one TB and the associated HARQ information is received from the Sidelink HARQ Entity. The sequence of redundancy versions is 0, 2, 3, 1. The variable CURRENT_IRV is an index into the sequence of redundancy versions. This variable is updated modulo 4. For each received TB and associated HARQ information, the Sidelink process shall:
- if this is a new transmission:
   - set CURRENT_IRV to 0;
   - store the received data in the soft buffer and optionally attempt to decode the received data according to CURRENT_IRV.
- else if this is a retransmission:
   - if the data for this TB has not yet been successfully decoded:
      - increment CURRENT_IRV by 1;
      - combine the received data with the data currently in the soft buffer for this TB and optionally attempt to decode the combined data according to the CURRENT_IRV.
- if the data which the MAC entity attempted to decode was successfully decoded for this TB:
   - if this is the first successful decoding of the data for this TB:
      - if the DST field of the decoded MAC PDU subheader is equal to the 16 MSB of any of the Destination Layer-2 ID(s) of the UE for which the 8 LSB are equal to the Group Destination ID in the corresponding SCI:
         - deliver the decoded MAC PDU to the disassembly and demultiplexing entity.

3GPP TS 36.331 describes the sidelink related procedures as follows:

### 5.10.2 Sidelink UE information

### 5.10.2.1 General

### [Figure 5.10.2-1 of 3GPP 36.331 V12.7.0 is reproduced as FIG. 7]

The purpose of this procedure is to inform E-UTRAN that the UE is interested or no longer interested to receive sidelink communication or discovery, as well as to request assignment or release of transmission resources for sidelink communication or discovery announcements.

### 5.10.2.2 Initiation

A UE capable of sidelink communication or discovery that is in RRC_CONNECTED may initiate the procedure to indicate it is (interested in) receiving sidelink communication or discovery in several cases including upon successful connection establishment, upon change of interest, upon change to a PCell broadcasting *SystemInformationBlockType18* or *SystemInformationBlockType19.* A UE capable of sidelink communication or discovery may initiate the procedure to request assignment of dedicated resources for the concerned sidelink communication transmission or discovery announcements.
- NOTE 1: A UE in RRC_IDLE that is configured to transmit sidelink communication/ discovery announcements, while *SystemInformationBlockType18*/ *SystemInformationBlockType19* does not include the resources for transmission (in normal conditions), initiates connection establishment in accordance with 5.3.3.1a.

Upon initiating the procedure, the UE shall:

```
 1> if SystemInformationBlockType18 is broadcast by the PCell:
    2> ensure having a valid version of SystemInformationBlockType18 for the PCell;
    2> if configured by upper layers to receive sidelink communication:
       3> if the UE did not transmit a SidelinkUEInformation message since last entering
          RRC_CONNECTED state; or
       3> if since the last time the UE transmitted a SidelinkUEInformation message the UE
          connected to a PCell not broadcasting SystemInformationBlockType18; or
 - NOTE 2: After handover/ re-establishment from a source PCell not broadcasting
          SystemInformationBlockType18 the UE repeats the same interest information that it
          provided previously as such a source PCell may not forward the interest
          information.
       3> if the last transmission of the SidelinkUEInformation message did not include
          commRxInterestedFreq; or if the frequency configured by upper layers to receive
          sidelink communication on has changed since the last transmission of the
          SidelinkUEInformation message:
          4> initiate transmission of the SidelinkUEInformation message to indicate the
            sidelink communication reception frequency of interest in accordance with
            5.10.2.3;
    2> else:
       3> if the last transmission of the SidelinkUEInformation message included
          commRxInterestedFreq:
          4> initiate transmission of the SidelinkUEInformation message to indicate it is no
             longer interested in sidelink communication reception in accordance with
            5.10.2.3;
    2> if configured by upper layers to transmit sidelink communication:
       3> if the UE did not transmit a SidelinkUEInformation message since entering
          RRC_CONNECTED state; or
       3> if since the last time the UE transmitted a SidelinkUEInformation message the UE
          connected to a PCell not broadcasting SystemInformationBlockType18; or
       3> if the last transmission of the SidelinkUEInformation message did not include
          commTxResourceReq; or if the information carried by the commTxResourceReq has
          changed since the last transmission of the SidelinkUEInformation message:
          4> initiate transmission of the SidelinkUEInformation message to indicate the
            sidelink communication transmission resources required by the UE in accordance
            with 5.10.2.3;
    2> else:
       3> if the last transmission of the SidelinkUEInformation message included
          commTxResourceReq:
          4> initiate transmission of the SidelinkUEInformation message to indicate it does no
             longer require sidelink communication transmission resources in accordance
            with 5.10.2.3;
 1> if SystemInformationBlockType19 is broadcast by the PCell:
    2> ensure having a valid version of SystemInformationBlockType19 for the PCell;
    2> if configured by upper layers to receive sidelink discovery announcements on a serving
       frequency or on one or more frequencies included in discInterFreqList, if included in
       SystemInformationBlockType19:
       3> if the UE did not transmit a SidelinkUEInformation message since last entering
          RRC_CONNECTED state; or
       3> if since the last time the UE transmitted a SidelinkUEInformation message the UE
          connected to a PCell not broadcasting SystemInformationBlockType19; or
       3> if the last transmission of the SidelinkUEInformation message did not include
          discRxInterest:
          4> initiate transmission of the SidelinkUEInformation message to indicate it is
             interested in sidelink discovery reception in accordance with 5.10.2.3;
    2> else:
       3> if the last transmission of the SidelinkUEInformation message included
          discRxInterest:
          4> initiate transmission of the SidelinkUEInformation message to indicate it is no
             longer interested in sidelink discovery reception in accordance with 5.10.2.3;
    2> if the UE is configured by upper layers to transmit sidelink discovery announcements:
       3> if the UE did not transmit a SidelinkUEInformation message since entering
          RRC_CONNECTED state; or
       3> if since the last time the UE transmitted a SidelinkUEInformation message the UE
          connected to a PCell not broadcasting SystemInformationBlockType19; or
       3> if the last transmission of the SidelinkUEInformation message did not include
          discTxResourceReq; or if the sidelink discovery announcement resources required
          by the UE have changed (i.e. resulting in a change of discTxResourceReq) since the
          last transmission of the SidelinkUEInformation message:
          4> initiate transmission of the SidelinkUEInformation message to indicate the
            sidelink discovery announcement resources required by the UE in accordance
            with 5.10.2.3;
    2> else:
       3> if the last transmission of the SidelinkUEInformation message included
          discTxResourceReq:
          4> initiate transmission of the SidelinkUEInformation message to indicate it does no
             longer require sidelink discovery announcement resources in accordance with
            5.10.2.3;
```

### 5.10.2.3 Actions related to transmission of SidelinkUEInformation message

The UE shall set the contents of the *SidelinkUEInformation* message as follows:

```
 1> if SystemInformationBlockType18 is broadcast by the PCell:
    2> if configured by upper layers to receive sidelink communication:
       3> include commRxInterestedFreq and set it to the sidelink communication frequency;
    2> if configured by upper layers to transmit sidelink communication:
       3> include commTxResourceReq and set its fields as follows:
          4> set carrierFreq to indicate the sidelink communication frequency i.e. the same
            value as indicated in commRxInterestedFreq if included;
          4> set destinationInfoList to include the sidelink communication transmission
            destination(s) for which it requests E-UTRAN to assign dedicated resources;
 1> if SystemInformationBlockType19 is broadcast by the PCell:
    2> if configured by upper layers to receive sidelink discovery announcements on a serving
       frequency or one or more frequencies included in discInterFreqList, if included in
       SystemInformationBlockType19:
       3> include discRxInterest;
    2> if the UE is configured by upper layers to transmit sidelink discovery announcements:
       3> include discTxResourceReq and set it to indicate the number of discovery messages
          for sidelink discovery announcement(s) for which it requests E-UTRAN to assign
          dedicated resources;
```

The UE shall submit the *SidelinkUEInformation* message to lower layers for transmission.

### 5.10.3 Sidelink communication monitoring

A UE capable of sidelink communication that is configured by upper layers to receive sidelink communication shall:

```
 1> if the conditions for sidelink operation as defined in 5.10.1a are met:
    2> if in coverage on the frequency used for sidelink communication, as defined in TS
       36.304 [4, 11.4]:
       3> if the cell chosen for sidelink communication reception broadcasts
          SystemInformationBlockType18 including commRxPool:
          4> configure lower layers to monitor sidelink control information and the
            corresponding data using the pool of resources indicated by commRxPool;
 - NOTE 1: If commRxPool includes one or more entries including rxParametersNCell,
          the UE may only monitor such entries if the associated PSS/SSS or SLSSIDs is
          detected. When monitoring such pool(s), the UE applies the timing of the
          concerned PSS/SSS or SLSS.
    2> else (i.e. out of coverage on the sidelink carrier):
       3> configure lower layers to monitor sidelink control information and the
          corresponding data using the pool of resources that were preconfigured (i.e.
          preconfigComm in SL-Preconfiguration defined in 9.3);
 - NOTE 2: The UE may monitor in accordance with the timing of the selected
          SyncRef UE, or if the UE does not have a selected SyncRef UE, based on the UE's
          own timing.
```

### 5.10.4 Sidelink communication transmission

A UE capable of sidelink communication that is configured by upper layers to transmit sidelink communication and has related data to be transmitted shall:

```
 1> if the conditions for sidelink operation as defined in 5.10.1a are met:
    2> if in coverage on the frequency used for sidelink communication, as defined in TS
       36.304 [4, 11.4]:
       3> if the UE is in RRC_CONNECTED and uses the PCell for sidelink communication:
          4> if the UE is configured, by the current PCell/ the PCell in which physical layer
             problems or radio link failure was detected, with commTxResources set to
            scheduled:
            5> if T310 or T311 is running; and if the PCell at which the UE detected physical
                layer problems or radio link failure broadcasts SystemInformationBlockType18
               including commTxPoolExceptional; or
            5> if T301 is running and the cell on which the UE initiated connection re-
               establishment broadcasts SystemInformationBlockType18 including
               commTxPoolExceptional:
               6> configure lower layers to transmit the sidelink control information and the
                  corresponding data using the pool of resources indicated by the first entry
                  in commTxPoolExceptional;
            5> else:
               6> configure lower layers to request E-UTRAN to assign transmission
                  resources for sidelink communication;
          4> else if the UE is configured with commTxPoolNormalDedicated:
            5> configure lower layers to transmit the sidelink control information and the
               corresponding data using the pool of resources indicated by the first entry in
               commTxPoolNormalDedicated;
       3> else (i.e. sidelink communication in RRC_IDLE or on cell other than PCell in
          RRC_CONNECTED):
          4> if the cell chosen for sidelink communication transmission broadcasts
            SystemInformationBlockType18:
            5> if SystemInformationBlockType18 includes commTxPoolNormalCommon:
               6> configure lower layers to transmit the sidelink control information and the
                  corresponding data using the pool of resources indicated by the first entry
                  in commTxPoolNormalCommon;
            5> else:
               6> if the last connection establishment was initiated to request sidelink
                  communication transmission resources and resulted in T300 expiry; and
               6> if the cell on which the UE initiated connection establishment broadcasts
                  SystemInformationBlockType18 including commTxPoolExceptional:
                  7>from the moment T300 expired, as specified in 5.3.3.6, until receiving an
                     RRCConnectionReconfiguration including sl-CommConfig or until
                     receiving an RRCConnectionRelease or an RRCConnectionReject;
                     8> configure lower layers to transmit the sidelink control information
                        and the corresponding data using the pool of resources indicated by
                        the first entry in commTxPoolExceptional;
    2> else (i.e. out of coverage on sidelink carrier):
       3> configure lower layers to transmit the sidelink control information and the
          corresponding data using the pool of resources that were preconfigured i.e.
          indicated by the first entry in preconfigComm in SL-Preconfiguration defined in 9.3
          and in accordance with the timing of the selected SyncRef UE, or if the UE does not
          have a selected SyncRef UE, based on the UEs own timing;
```

### 5.10.5 Sidelink discovery monitoring

A UE capable of sidelink discovery that is configured by upper layers to monitor sidelink discovery announcements shall:

```
 1> for each frequency the UE is configured to monitor sidelink discovery announcements on,
    prioritising the frequencies included in discInterFreqList, if included in
    SystemInformationBlockType19:
    2> configure lower layers to monitor sidelink discovery announcements using the pool of
       resources indicated by discRxPool in SystemInformationBlockType19 without affecting
       normal operation i.e. receive during idle periods or by using a spare receiver;
 - NOTE 1: The requirement not to affect normal UE operation also applies for the
          acquisition of sidelink discovery related system and synchronisation information
          from inter-frequency cells.
 - NOTE 2: The UE is not required to monitor all pools simultaneously.
 - NOTE 3: It is up to UE implementation to decide whether a cell is sufficiently good
          to be used to monitor sidelink discovery announcements.
 - NOTE 4: If discRxPool includes one or more entries including rxParameters, the UE
          may only monitor such entries if the associated SLSSIDs are detected. When
          monitoring such pool(s) the UE applies the timing of the corresponding SLSS.
```

### 5.10.6 Sidelink discovery announcement

A UE capable of sidelink discovery that is configured by upper layers to transmit sidelink discovery announcements shall:

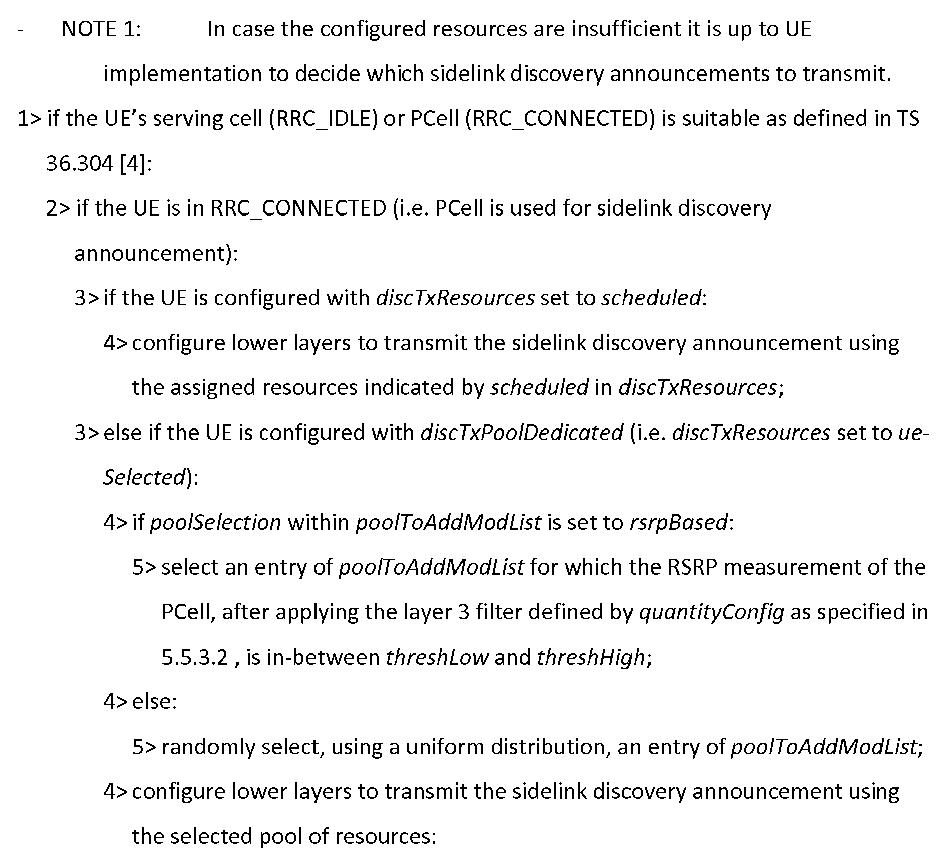

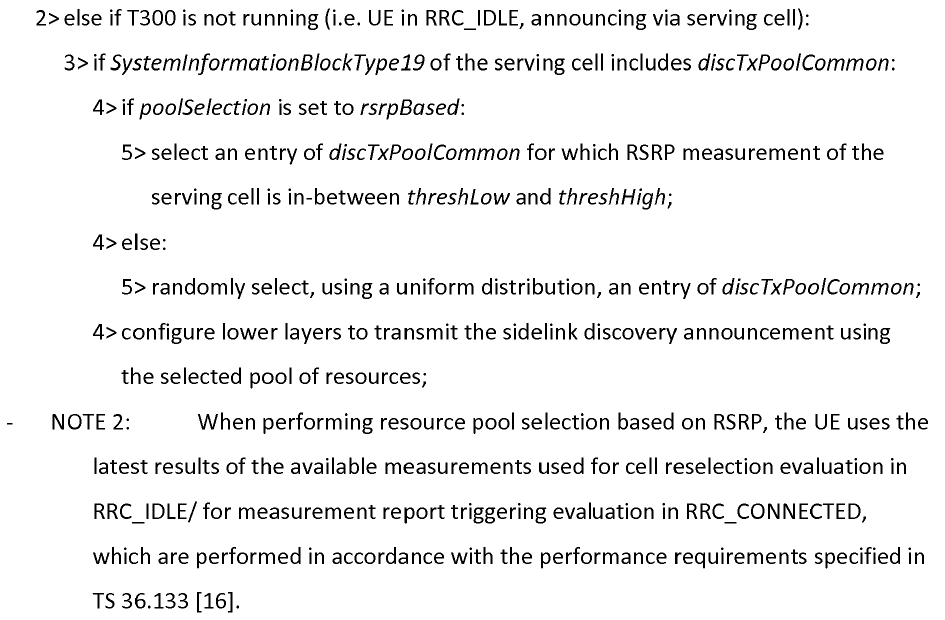

### 5.10.7 Sidelink synchronisation information transmission

### 5.10.7.1 General

### [Figure 5.10.7.1-1 of 3GPP 36.331 V12.7.0 is reproduced as FIG. 8]

### [Figure 5.10.7.1-2 of 3GPP 36.331 V12.7.0 is reproduced as FIG. 9]

### [Figure 5.10.7.1-3 of 3GPP 36.331 V12.7.0 is reproduced as FIG. 10]

The purpose of this procedure is to provide synchronisation information to a UE. The synchronisation information concerns a Sidelink Synchronisation Signal (SLSS) for sidelink discovery, while it concerns an SLSS, timing information and some additional configuration parameters (i.e. the *MasterlnformationBlock-SL* message) for sidelink communication. A UE transmits synchronisation information either when E-UTRAN configures it to do so by dedicated signalling (i.e. network based), or when not configured by dedicated signalling (i.e. UE based) and E-UTRAN broadcasts (in coverage) or pre-configures a threshold (out of coverage).

The synchronisation information transmitted by the UE may be derived from information/ signals received from E-UTRAN (in coverage) or received from a UE acting as synchronisation reference for the transmitting UE. In the remainder, the UE acting as synchronisation reference is referred to as SyncRef UE.

### 5.10.7.2 Initiation

A UE capable of SLSS transmission shall, when transmitting sidelink discovery announcements in accordance with 5.10.6 and when the following conditions are met:

```
 1> if the UE's serving cell (RRC_IDLE) or PCell (RRC_CONNECTED) is suitable as defined in TS
    36.304 [4]:
    2> if in RRC_CONNECTED; and if networkControlledSyncTx is configured and set to on; or
    2> if networkControlledSyncTx is not configured; and syncTxThreshIC is included in
       SystemInformationBlockType19; and the RSRP measurement of the serving cell
       (RRC_IDLE) or PCell (RRC_CONNECTED) is below the value of syncTxThreshIC:
       3>transmit SLSS in accordance with 5.10.7.3 and TS 36.211 [21], unless the UE uses the
          selected subframe for regular uplink transmission;
```

A UE capable of sidelink communication that is configured by upper layers to transmit sidelink communication shall, irrespective of whether or not it has data to transmit:

```
 1> if the conditions for sidelink operation as defined in 5.10.1a are met:
    2> if in RRC_CONNECTED; and if networkControlledSyncTx is configured and set to on:
       3>transmit SLSS in accordance with 5.10.7.3 and TS 36.211 [21];
       3> transmit the MasterlnformationBlock-SL message, in the same subframe as SLSS,
          and in accordance with 5.10.7.4;
```

A UE shall, when transmitting sidelink communication in accordance with 5.10.4 and when the following conditions are met:

```
 1> if in coverage on the frequency used for sidelink communication, as defined in TS 36.304
    [4, 11.4]:
    2> if the UE is in RRC_CONNECTED; and networkControlledSyncTx is not configured; and
       syncTxThreshIC is included in SystemInformationBlockType18; and the RSRP
       measurement of the cell chosen for sidelink communication transmission is below the
       value of syncTxThreshIC; or
    2> if the UE is in RRC_IDLE; and syncTxThreshIC is included in
       SystemInformationBlockType18; and the RSRP measurement of the cell chosen for
       sidelink communication transmission is below the value of syncTxThreshIC:
       3>transmit SLSS in accordance with 5.10.7.3 and TS 36.211 [21];
       3> transmit the MasterlnformationBlock-SL message, in the same subframe as SLSS,
          and in accordance with 5.10.7.4;
 1> else (i.e. out of coverage):
    2> if syncTxThreshOoC is included in the preconfigured sidelink parameters (i.e. SL-
       Preconfiguration defined in 9.3); and the UE has no selected SyncRef UE or the S-RSRP
       measurement result of the selected SyncRef UE is below the value of
       syncTxThreshOoC:
       3>transmit SLSS in accordance with 5.10.7.3 and TS 36.211 [21];
       3> transmit the MasterlnformationBlock-SL message, in the same subframe as SLSS,
          and in accordance with 5.10.7.4;
```

### 5.10.7.3 Transmission of SLSS

The UE shall select the SLSSID and the subframe in which to transmit SLSS as follows:

```
 1> if triggered by sidelink discovery announcement:
    2> select the SLSSID included in the entry of discSyncConfig included in the received
       SystemInformationBlockType19, that includes txParameters;
    2> use syncOffsetIndicator corresponding to the selected SLSSID;
    2> for each pool used for the transmission of discovery announcements (each
       corresponding to the selected SLSSID):
       3> if a subframe indicated by syncOffsetIndicator corresponds to the first subframe of
          the discovery transmission pool;
          4> select the concerned subframe;
       3> else
          4> select the subframe indicated by syncOffsetIndicator that precedes and which, in
            time domain, is nearest to the first subframe of the discovery transmission pool;
 1> if triggered by sidelink communication:
    2> if in coverage on the frequency used for sidelink communication, as defined in TS
       36.304 [4, 11.4]:
       3> select the SLSSID included in the entry of commSyncConfig that is included in the
          received SystemInformationBlockType18 and includes txParameters;
       3> use syncOffsetIndicator corresponding to the selected SLSSID;
       3> if in RRC_CONNECTED; and if networkControlledSyncTx is configured and set to on:
          4> select the subframe(s) indicated by syncOffsetIndicator;
       3> else (when transmitting communication):
          4> select the subframe(s) indicated by syncOffsetIndicator within the SC period in
            which the UE intends to transmit sidelink control information or data;
    2> else (i.e. out of coverage on sidelink carrier):
       3> select the synchronisation reference UE (i.e. SyncRef UE) as defined in 5.10.8;
       3> if the UE has a selected SyncRef UE and inCoverage in the MasterInformationBlock-
          SL message received from this UE is set to TRUE; or
       3> if the UE has a selected SyncRef UE and inCoverage in the MasterInformationBlock-
          SL message received from this UE is set to FALSE while the SLSS from this UE is part
          of the set defined for out of coverage, see TS 36.211 [21]:
          4> select the same SLSSID as the SLSSID of the selected SyncRef UE;
          4> select the subframe in which to transmit the SLSS according to the
            syncOffsetIndicator1 or syncOffsetIndicator2 included in the preconfigured
            sidelink parameters (i.e. preconfigSync in SL-Preconfiguration defined in 9.3),
            such that the subframe timing is different from the SLSS of the selected SyncRef
             UE;
       3> else if the UE has a selected SyncRef UE:
          4> select the SLSSID from the set defined for out of coverage having an index that is
             168 more than the index of the SLSSID of the selected SyncRef UE, see TS 36.211
             [21];
          4> select the subframe in which to transmit the SLSS according to
            syncOffsetIndicator1 or syncOffsetIndicator2 included in the preconfigured
            sidelink parameters (i.e. preconfigSync in SL-Preconfiguration defined in 9.3),
            such that the subframe timing is different from the SLSS of the selected SyncRef
             UE;
       3> else (i.e. no SyncRef UE selected):
          4> randomly select, using a uniform distribution, an SLSSID from the set of
            sequences defined for out of coverage, see TS 36.211 [21];
          4> select the subframe in which to transmit the SLSS according to the
            syncOffsetIndicator1 or syncOffsetIndicator2 (arbitrary selection between these)
             included in the preconfigured sidelink parameters (i.e. preconfigSync in SL-
            Preconfiguration defined in 9.3);
```

### 5.10.7.4 Transmission of MasterInformationBlock-SL message

The UE shall set the contents of the *MasterInformationBlock-SL* message as follows:

```
 1> if in coverage on the frequency used for sidelink communication, as defined in TS 36.304
    [4, 11.4]:
    2> set inCoverage to TRUE;
    2> set sl-Bandwidth to the value of ul-Bandwidth as included in the received
       SystemInformationBlockType2 of the cell chosen for sidelink communication;
    2> if tdd-Config is included in the received SystemInformationBlockType1:
       3> set subframeAssignmentSL to the value representing the same meaning as of
          subframeAssignment that is included in tdd-Config in the received
          SystemInformationBlockType1;
    2> else:
       3> set subframeAssignmentSL to none;
    2> if syncInfoReserved is included in an entry of commSyncConfig from the received
       SystemInformationBlockType18;
       3> set reserved to the value of syncInfoReserved in the received
          SystemInformationBlockType18;
    2> else:
       3> set all bits in reserved to 0;
 1> else if the UE has a selected SyncRef UE (as defined in 5.10.8):
    2> set inCoverage to FALSE;
    2> set sl-Bandwidth, subframeAssignmentSL and reserved to the value of the
       corresponding field included in the received MasterInformationBlock-SL;
 1> else (i.e. no SyncRef UE selected):
    2> set inCoverage to FALSE;
    2> set sl-Bandwidth, subframeAssignmentSL and reserved to the value of the
       corresponding field included in the preconfigured sidelink parameters (i.e.
       preconfigGeneral in SL-Preconfiguration defined in 9.3);
 1> set directFrameNumber and directSubframeNumber according to the subframe used to
    transmit the SLSS, as specified in 5.10.7.3;
 1> submit the MasterlnformationBlock-SL message to lower layers for transmission upon
    which the procedure ends;
```

### 5.10.7.5 Void

### 5.10.8 Sidelink synchronisation reference

### 5.10.8.1 General

The purpose of this procedure is to select a synchronisation reference and used a.o. when transmitting sidelink communication or synchronisation information.

### 5.10.8.2 Selection and reselection of synchronisation reference UE (SyncRef UE)

The UE shall:

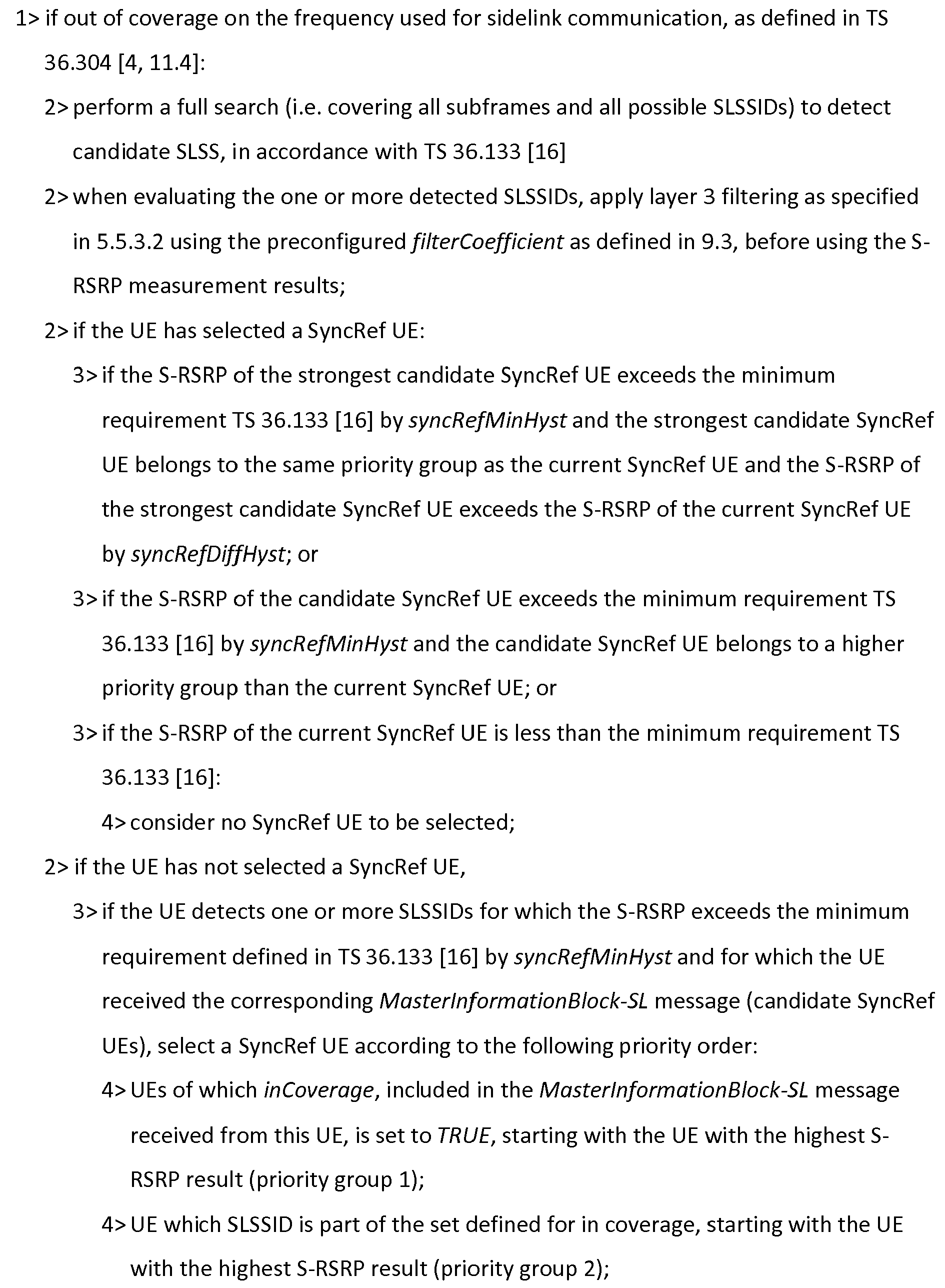

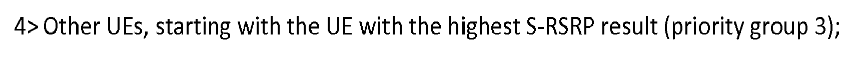

### 5.10.9 Sidelink common control information

### 5.10.9.1 General

The sidelink common control information is carried by a single message, the *MasterlnformationBlock-SL* (MIB-SL) message. The MIB-SL includes timing information as well as some configuration parameters and is transmitted via SL-BCH.

The MIB-SL uses a fixed schedule with a periodicity of 40 ms without repetitions. In particular, the MIB-SL is scheduled in subframes indicated by *syncOffsetIndicator* i.e. for which (10*DFN + subframe number) mod 40 = *syncOffsetIndicator.*

The sidelink common control information may change at any transmission i.e. neither a modification period nor a change notification mechanism is used.

A UE configured to receive or transmit sidelink communication shall:

```
 1> if the UE has a selected SyncRef UE, as specified in 5.10.8.2:
    2> ensure having a valid version of the MasterlnformationBlock-SL message of that
       SyncRefUE:
```

### 5.10.9.2 Actions related to reception of MasterInformationBlock-SL message

Upon receiving *MasterlnformationBlock-SL,* the UE shall:

```
 1> apply the values of sl-Bandwidth, subframeAssignmentSL, directFrameNumber and
    directSubframeNumber included in the received MasterInformationBlock-SL message;
```

3GPP TS 23.303 provides a graph for the architecture related to proximity service.

### 4.2 Architectural Reference Model

Figure 4.2-1 shows the high level view of the non-roaming architecture. In this figure, UE A and UE B use a subscription of the same PLMN.

### [Figure 4.2-1 of 3GPP TS 23.303 V13.1.1 is reproduced as FIG. 11]

Furthermore, 3GPP TS 23.803 lists requirements about D2D communication or discovery. Some of the requirements relate to path switching. According to use case and related description, the path switching requirement described in this 3GPP TS 23.303 achieves service continuity. More specifically, 3GPP TS 23.803 states:
[CPR.12] [PR.29] The system shall be capable of monitoring communication characteristics (e.g. channel condition, QoS of the path, volume of traffic etc.) on the E-UTRA ProSe Communication path, regardless of whether there is an existing data session on the infrastructure path.

[CPR.117] [PR.28] The 3GPP system shall be capable of moving a user traffic session from the infrastructure path to an E-UTRA ProSe Communication path, when the ProSe-enabled UEs are determined to be in range allowing ProSe Communication.

[CPR.118] [PR.30] The 3GPP system shall be capable of moving a user traffic session from an E-UTRA ProSe Communication path to an infrastructure path. At a minimum, this functionality shall support the case when the E-UTRA ProSe Communication path is no longer feasible.

In addition, U.S. Patent Application Publication No. U.S. 2015/0004984, entitled "Method and Apparatus for Providing Proximity Service in Wireless Communication System", describes possible implementation for network to switch communication path between PC5 interface and Uu interface. Also, U.S. Patent Application Publication No. US 2014/0160950, entitled "Methods and Apparatuses for Facilitating D2D Bearer Switching", describes possible steps to switch from D2D (Device-to-Device) path to uplink/downlink path.

The switch point information in this invention is information used to recover the communication session. It may be a sequence number for PDCP (Packet Data Convergence Protocol) layer of D2D link.

In LTE Rel-12, proximity services (ProSe) or device-to-device (D2D) has been studied. To reduce the standardization work, the Rel-12 ProSe mechanism (e.g., D2D communication) could be used as a candidate for realizing LTE-based V2X services. It means that PC5 interface (sidelink) defined for D2D could be used for the transport of V2X traffic. For example, as illustrated in FIG. 12, V2V/V2P services could be realized by PC5 transmission from a vehicle to another vehicle/pedestrian. V2I/V2N services could be realized by PC5 transmission from a vehicle to a UE-type RSU (and forwarded to infrastructure/network by the UE-type RSU).

In addition, Uu transport for V2X traffic is also considered, as specified in 3GPP R2-154891. It generally means that Uu interface could also be a candidate for transporting V2X traffic. For example, as illustrated in FIG. 12, V2V/V2P services could be realized by combining one UL transmission from a vehicle to E-UTRAN (Evolved Universal Terrestrial Radio Access Network) and one DL transmission from E-UTRAN to another vehicle/pedestrian. V2I/V2N services could be realized by Uu transmission from a vehicle to an eNB-type RSU (Road Side Unit).

When more than one interface is available, a UE needs to decide which interface to use when it has V2X traffic to transmit. 3GPP R2-154147 mentions that depending on V2X application, a UE may have concurrent transmission of messages over PC5 and Uu interfaces. It is up to the application/service to decide on what interface the message shall be transmitted.

After the UE determines the interface used for transporting V2X traffic (e.g., indicated by application/service layer), the UE starts to transmit the V2X traffic via the interface. Regardless of how the UE determines the interface, during the ongoing V2X session, the determined interface may not always be the best choice for transporting the V2X traffic. For example, the UE may move to another area due to UE mobility. As another example, the condition surrounding the UE may change due to mobility of proximity UEs. As a further example, the condition of network may also change from time to time. As a result of the condition change, the determined interface may not be the most suitable one for transporting V2X traffic. The suitability may depend on various factors of an interface (such as loading, radio condition, and resource efficiency).

Therefore, it may not be optimal to always use the same interface for the whole V2X traffic session. The determination of the interface for transporting V2X traffic should be more dynamic and how to realize it should be carefully considered.

The determination could possibly depend on radio quality of each interface. For example, the UE may measure radio quality of both PC5 interface and Uu interface, and reports measurement result to a network so that the network could configure the UE with a specific interface for transporting V2X traffic based on the measurement result.

Alternatively, the UE may autonomously determine a specific interface based on the measurement result and network assistance information (e.g., radio quality threshold, etc.) acquired from the network. For example, the UE may select PC5 interface if the radio quality of the Uu interface is lower than a threshold provided by the network. However, if the UE is not in network coverage, the above alternative(s) may not be applicable because the determination relies on the network assistance.

In general, V2X traffic (e.g., V2I/V2N) transported to a core network or an eNB-type RSU should be transmitted via Uu interface. Otherwise, V2X traffic (e.g., V2V/V2P) should be transmitted via PC5 interface because all V2V/V2P messages also transported to the eNB-type RSU would result in inducing system loading and signaling overhead due to two-hop transport (i.e., from the UE to another UE via the eNB-type RSU). Therefore, a predefined rule for the determination is needed.

For example, Uu interface would be prioritized for V2I/V2N messages as long as there is an eNB-type RSU. If Uu interface is not feasible due to RLF (Radio Link Failure) for example, PC5 interface would be applied. Similarly, PC5 interface is prioritized for V2V/V2P messages as long as there is an UE-type RSU. If PC5 interface is not feasible due to operation policy for example, Uu interface would be applied.

In the following discussion, some alternatives for the determination based on the predefined rules are proposed. However, for in-coverage condition, some alternatives could also be based on configurable rules (e.g., threshold). In such a case, the rule may preferably be configured by an eNB through either a dedicated message or a system information.

**Application to V2I/V2N (Uu→PC5)** - In general, the UE in the network coverage should transmit V2I/V2N messages via the Uu interface. Since the UE could be close to an UE-type RSU due to mobility, the UE could determine to transmit the V2I/V2N message via the PC5 interface through the UE-type RSU if the UE is aware that the PC5 interface has a better radio quality than the radio quality of the Uu interface.

Preferably, if the radio quality of the PC5 link between the UE and the UE-type RSU is larger than a first threshold while the radio quality of the Uu link between the UE and an eNB-type RSU is less than a second threshold, the UE could decide to transmit the V2I/V2N message via the PC5 interface.

Alternatively, the UE could decide to transmit the V2I/V2N message via the PC5 interface through the UE-type RSU if a value derived from radio quality of PC5 link and radio quality of Uu link is larger or less than a threshold. More specifically, the value is derived from the radio quality of Uu link minus the radio quality of PC5 link. The UE may decide to transmit the V2I/V2N message via the PC5 interface irrespective of factors other than the radio quality of Uu link and the radio quality of PC5 link.

**Application to V2I/V2N (PC5→Uu)** - It is possible that a UE is in the network coverage.

However, the UE may transmit V2I/V2N messages via PC5 interface. Since the UE may be far from an UE-type RSU due to mobility, the UE may determine to transmit the V2I/V2N message via Uu interface through E-UTRAN if the radio quality of PC5 link between the UE and the UE-type RSU is less than a threshold while the radio quality of Uu link between the UE and an eNB-type RSU is larger than another threshold.

Alternatively, the UE may determine to transmit the V2I/V2N message via Uu interface if a value derived from radio quality of PC5 link and radio quality of Uu link is larger or less than a threshold. The value may be derived from radio quality of PC5 link minus radio quality of Uu link.

**Application to V2V/(PC5→Uu)** - For ProSe (Proximity Service) communication in Rel-12, a Rel-12 UE should send a NAS (Non-Access Stratum) message to the network for ProSe authentication and authorization if the Rel-12 UE would like to perform ProSe communication. Similarly, an UE that would like to perform transporting V2X traffic should be authorized. Moreover, the UE may need to request sidelink resource(s) from an eNB for the PC5 link though RRC message (e.g., a Sidelink UE Information message) as Rel-12 UE.

One possible way for network to indicate interface change is to reject the resource request or to provide special configuration. Preferably, the special configuration could be provided when there is an ongoing PC5 session related to V2V/V2P. If this is the case, the UE should initiate legacy mechanism (by sending a NAS message or RRC signaling for example) to establish a connection between the UE and the eNB-type RSU when the UE is aware that the PC5 interface is inapplicable. The eNB-type RSU may provide the special configuration/rejection by sending a dedicated signaling containing a PC5 resource release to the UE. Alternatively, the eNB-type RSU could reject by de-configuring the PC5 logical channel or the PC5 RB (Radio of Bearer) of V2V/V2P.

After the UE starts to transport V2V/V2P messages via PC5 interface, if the eNB-type RSU transmits a dedicated signaling to the UE and the dedicated signaling includes radio bearer configuration, the UE may establish a specific radio bearer based on the radio bearer configuration and may transport the V2V/V2P messages through the specific radio bearer. The special configuration may be the configuration of the specific radio bearer. Preferably, the specific radio bearer could be used to transmit data to the eNB instead of the server in the core network. Preferably, the packet transmitted on the specific radio bearer could have a different PDCP header format from the packet transmitted on legacy DRB. More specifically, the difference may be a new field or a new value for existed field to indicate that data is sent to eNB-type RSU.

The interface switching could be determined based on radio condition. If the Uu radio quality becomes larger than a threshold (which is configured by network or is predefined in the UE) while the UE is within the network coverage and is already transporting V2V/V2P messages via PC5 interface, the UE could initiate a legacy mechanism (by sending a NAS message or a RRC signaling for example) to establish a connection between the UE and the eNB-type RSU, and then transmits V2V/V2P messages through the connection via the Uu interface. The benefit of this alternative is reducing transmission collision because the UEs that are close to the eNB-type RSU would not contend PC5 (Mode2) resources with other UEs that are far from the eNB-type RSU that that are also transporting V2V/V2P messages. Another benefit of this alternative may be achieving effective broadcast range of V2V/V2P service because the UE configured with open loop power control will need to limit its sidelink transmission power based on distance between the UE and the eNB. In general, the better radio quality for Uu link, the lower power can be used for PC5 link. Moreover, the UE may not take radio quality of PC5 link into account for interface change.

**Application to V2V/V2P (Uu→PC5)** - The network could possibly configure the UE to use PC5 interface for transporting V2V/V2P messages when the UE is transporting V2V/V2P messages via the Uu interface. In this situation, the network could send an indication to indicate the interface switch to the UE. For example, the eNB-type RSU transmits a special RRC dedicated signaling for indicating switch, where the dedicated signaling may include a RB release indication for releasing the radio bearer used for transporting V2V/V2P messages. With the dedicated signaling, the UE could release the related radio bearer and could start to transport V2V/V2P messages via the PC5 interface.

Preferably, the network could send a dedicated signaling containing a PC5 resource allocation to indicate an interface change. The UE would transport the V2V/V2P messages via the PC5 interface after the UE receives the dedicated signaling.

Preferably, the network could send a dedicated signaling to configure a PC5 logical channel (or a PC5 RB) for V2V/V2P messages which can be used to indicate an interface change. The UE would transport the V2V/V2P messages via PC5 interface after the UE receives the dedicated signaling.

Alternatively, the interface switching could be determined based on the radio condition. If Uu radio quality becomes lower than a threshold (which could be configured by network or could be predefined in the UE) while the UE is within the network coverage and is already transporting V2V/V2P messages via Uu interface, the UE could request resource(s) of the PC5 link, and could then transmit V2V/V2P messages through PC5 interface. The relative benefit is stated in above description of application to V2V/V2P (PC5→Uu).

Moreover, the above alternatives could be applied to any service which is allowed to use both PC5 link and Uu link. If a service is not allowed to use multiple interfaces, the UE may not switch interface for the service when it is rejected or receives special configuration.

Regarding radio quality mentioned in any alternatives above, the following possible options could be included:
1. The radio quality of Uu link could refer to the RSRP (Reference Signal Receiving Power) between the UE and the eNB-type RSU.
2. The radio quality of Uu link could refer to the RSRQ (Reference Signal Receiving Quality) between the UE and the eNB-type RSU.
3. The radio quality of Uu link could refer to the path-loss between the UE and the eNB-type RSU.
4. The radio quality of PC5 link could refer to the RSRP between the UE and the UE-type RSU.
5. The radio quality of PC5 link could refer to the RSRQ between the UE and the UE-type RSU.
6. The radio quality of PC5 link could refer to the path-loss between the UE and the UE-type RSU.
7. The radio quality of Uu link could be derived from monitoring reference signal from the eNB-type-RSU.
8. The radio quality of PC5 link could be derived from monitoring reference signal from the UE-type-RSU, monitoring discovery signal from the UE-type-RSU, or monitoring ProSe communication from the UE-type-RSU. More specifically, the UE could be served by the UE-type-RSU. When the UE is served by the eNB-type RSU, the UE-type RSU for measuring PC5 link quality could be any neighboring UE-type RSU which can be detected by the UE.

FIG. 13 is a flow chart 1300 according to a first exemplary embodiment according to the invention from the perspective of a UE. In step 1305, the UE uses a first interface to transmit data for a service. The service could be a V2V service, or a V2P service.

In step 1310, the UE receives an information from a base station for indicating that the first interface is not allowed to transmit data for the service. The information could be an indication to indicate interface switch. The information could be a PC5 resource release and/or a radio bearer setup creating a radio bearer used to transmit data for the service. Alternatively, the information could be a PC5 resource allocation and/or a radio bearer release releasing a radio bearer used to transmit data for the service. In addition, the radio bearer could be for the service, and/or could be used for carrying data and only exists between the base station and the UE. The radio bearer used to transmit data for the service is established between the base station and the UE. Also, the information could be carried by a *RRCConnectionReconfiguration* message or a system information.

In step 1315, the UE transmits a request to the base station for using a second interface in response to the reception of the information. The service could be allowed to use both the first interface and the second interface. The service may be a V2V (Vehicle-to-Vehicle) service, or a V2P (Vehicle-to-Pedestrian) service. Furthermore, the first interface could be a PC5 interface or a Uu interface. Similarly, the second interface is a PC5 interface or a Uu interface. The first interface could be the PC5 interface, and the second interface could be the Uu interface. Alternatively, the first interface could be the Uu interface and the second interface could be the PC5 interface.

The information may be a PC5 resource release or a PC5 resource allocation. Alternatively, the information may be a radio bearer setup, a radio bearer release, or a radio bearer configuration. Furthermore, the radio bearer is for the service, and/or is used for carrying data and only exists between the base station and the UE. The information may be carried by a *RRCConnectionReconfiguration* message or a system information.

The request could be a service request message related to NAS layer, a RRC (Radio Resource Control) message (e.g. Sidelink UE Information message), or a Sidelink BSR (Buffer Status Report).

Referring back to FIGS. 3 and 4, in one exemplary embodiment of a UE, the device 300 includes a program code 312 stored in the memory 310 program code 312. The CPU 308 could execute program code 312 to enable the UE (i) to use a first interface to transmit data for a service, (ii) to receives an information from an base station for indicating that the first interface is not allowed to transmit data for the service, and (iii) to transmit a request to the base station for using a second interface in response to the reception of the information. Furthermore, the CPU 308 can execute the program code 312 to perform all of the above-described actions and steps or others described herein.

FIG. 14 is a flow chart 1400 according to a second exemplary embodiment according to the invention from the perspective of a UE. In step 1405, the UE uses a first interface to transmit data for a service. The service could be a V2V service, or a V2P service.

In step 1410, the UE measures a Uu link quality. In step 1415, the UE decides to switch data transmission of the service from the first interface to a second interface based on a measurement result of the Uu link quality. The UE could switch the data transmission from a PC5 interface to a Uu interface if the measurement result of the Uu link quality is larger than a first threshold. Alternatively, the UE could switch the data transmission from a Uu interface to a PC5 interface if the measurement result of Uu link quality is less than a second threshold. Furthermore, the first threshold and the second threshold are different. The UE could also decide to switch interface, irrespective of the radio quality of PC5 interface.

The measurement result of Uu link quality could be RSRP, RSRQ, or path-loss. The service could be allowed to use both the first interface and the second interface. Furthermore, the first interface could be a PC5 interface or a Uu interface. Similarly, the second interface could be a PC5 interface or a Uu interface. The first interface could be the PC5 interface and the second interface could be the Uu interface. Alternatively, the first interface could be the Uu interface and the second interface could be the PC5 interface.

Referring back to FIGS. 3 and 4, in one exemplary embodiment of a UE, the device 300 includes a program code 312 stored in the memory 310 program code 312. The CPU 308 could execute program code 312 to enable the UE (i) to use a first interface to transmit data for a service, (ii) to measure a Uu link quality, and (iii) to decide to switch data transmission of the service from the first interface to a second interface based on a measurement result of the Uu link quality. Preferably, the CPU 308 could execute the program code 312 to enable the UE to decide to switch interface, irrespective of the radio quality of PC5 interface. Furthermore, the CPU 308 can execute the program code 312 to perform all of the above-described actions and steps or others described herein.

FIG. 15 is a flow chart 1500 according to a third exemplary embodiment from the perspective of a UE. In step 1505, the UE uses a first interface to transmit data for a service. The service could be a V2N service, a V2I service, a V2V service, or a V2P service.

In step 1510, the UE measures a Uu link quality and a PC5 link quality. The UE could measure the PC5 link quality by monitoring reference signals transmitted by a UE-type RSU, discovery signals transmitted by a UE-type RSU, or sidelink transmissions from a UE-type RSU.

In step 1515, the UE decides to switch data transmission of the service from the first interface to a second interface based on a measurement result of the Uu link quality and a measurement result of the PC5 link quality. The UE could switch the data transmission of the service from the PC5 interface to the Uu interface if the measurement result of Uu link quality is larger than a first threshold and the measurement result of PC5 link quality is less than a second threshold. Alternatively, the UE could switch the data transmission of the service from the Uu interface to the PC5 interface if the measurement result of the Uu link quality is less than a third threshold and the measurement result of the PC5 link quality is larger than a fourth threshold. The UE could also decide to switch interface, irrespective of any factors other than the measurement result of the PC5 link quality and the measurement result of the Uu link quality. The service could be allowed to use both the first interface and the second interface. Furthermore, the first interface could be a PC5 interface or a Uu interface. Similarly, the second interface could be a PC5 interface or a Uu interface. The first interface could be the PC5 interface and the second interface could be the Uu interface. Alternatively, the first interface could be the Uu interface and the second interface could be the PC5 interface.

The measurement result of the Uu link quality could be RSRP, RSRQ, or path-loss. Similarly, the PC5 link quality could be RSRP, RSRQ, or path-loss.

Referring back to FIGS. 3 and 4, in one exemplary embodiment of a UE, the device 300 includes a program code 312 stored in the memory 310 program code 312. The CPU 308 could execute program code 312 to enable the UE (i) to use a first interface to transmit data for a service, (ii) to measure a Uu link quality and a PC5 link quality, and (iii) to decide to switch data transmission of the service from the first interface to a second interface based on a measurement result of the Uu link quality and a measurement result of the PC5 link quality. Preferably, the CPU 308 could execute the program code 312 to enable the UE to decide to switch interface, irrespective of any factors other than the measurement result of the PC5 link quality and the measurement result of the Uu link quality. Furthermore, the CPU 308 can execute the program code 312 to perform all of the above-described actions and steps or others described herein.

FIG. 16 is a flow chart 1600 according to a fourth exemplary embodiment according to the invention from the perspective of a UE. In step 1605, the UE uses a first interface to transmit data for a service. The service could be a V2N service, a V2I service, a V2V service, or a V2P service.

In step 1610, the UE measures a Uu link quality and a PC5 link quality. The UE could measure the PC5 link quality by monitoring reference signals transmitted by a UE-type RSU, discovery signals transmitted by a UE-type RSU, or sidelink transmissions from a UE-type RSU.

In step 1615, the UE decides to switch data transmission of the service from the first interface to a second interface based on a difference between a measurement result of the Uu link quality and a measurement result of the PC5 link quality. The UE could switch the data transmission of the service from the PC5 interface to the Uu interface if the measurement result of the Uu link quality minus the measurement result of the PC5 link quality is larger than a first threshold. Alternatively, the UE could switch the data transmission of the service from the Uu interface to the PC5 interface if the measurement result of the Uu link quality minus the measurement result of the PC5 link quality is less than a second threshold. The UE could also decide to switch interface, irrespective of any factors other than the measurement result of the PC5 link quality and the measurement result of the Uu link quality.

The service could be allowed to use both the first interface and the second interface. Furthermore, the first interface could be a PC5 interface or a Uu interface. Similarly, the second interface could be a PC5 interface or a Uu interface. The first interface could be the PC5 interface and the second interface could be the Uu interface. Alternatively, the first interface could be the Uu interface and the second interface could be the PC5 interface.

The measurement result of the Uu link quality could be RSRP, RSRQ, or path-loss. Similarly, the measurement result of the PC5 link quality could be RSRP, RSRQ, or path-loss.

Referring back to FIGS. 3 and 4, in one exemplary embodiment of a UE, the device 300 includes a program code 312 stored in the memory 310 program code 312. The CPU 308 could execute program code 312 to enable the UE (i) to use a first interface to transmit data for a service, (ii) to measure a Uu link quality and a PC5 link quality, and (iii) to decide to switch data transmission of the service from the first interface to a second interface based on a difference between a measurement result of the Uu link quality and a measurement result of the PC5 link quality. Preferably, the CPU 308 could execute the program code 312 to enable the UE to decide to switch interface, irrespective of any factors other than the measurement result of the PC5 link quality and the measurement result of the Uu link quality. Furthermore, the CPU 308 can execute the program code 312 to perform all of the above-described actions and steps or others described herein.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

## Claims

1. A method of a User Equipment, in the following also referred to as UE, comprising:
the UE uses a PC5 interface to transmit data for a service (1305);
**characterized by**:
the UE receives an information from a base station for indicating that the PC5 interface is not allowed to transmit data for the service (1310);
the UE transmits a request to the base station for using a Uu interface in response to the reception of the information (1315); and
the UE uses the Uu interface to transmit data for the service.

2. A method of a User Equipment, in the following also referred to as UE, comprising:
the UE uses a Uu interface to transmit data for a service (1305);
**characterized by**:
the UE receives an information from the base station for indicating that the Uu interface is not allowed to transmit data for the service (1310);
the UE transmits a request to the base station for using a PC5 interface in response to the reception of the information (1315) ; and
the UE uses the PC5 interface to transmit data for the service.

3. The method of claim 1, wherein the information is a PC5 resource release and/or a radio bearer setup creating a radio bearer used to transmit data for the service.

4. The method of claim 2, wherein the information is a PC5 resource allocation, and/or a radio bearer release releasing a radio bearer used to transmit data for the service.

5. The method of any one of claims 2 and 4, wherein the request is a Sidelink UE Information message.

6. The method of any one of claims 1 to 5, wherein the information is carried by a *RRCConnectionReconfiguration* message or a system information.

7. The method of any one of claims 1 to 6, wherein the request is a service request message related to Non-Access Stratum, in the following also referred to as NAS, layer or a Radio Resource Control, in the following also referred to as RRC, message.

8. The method of any one of claims 1 to 7, wherein the service is a Vehicle-to-Vehicle, in the following also referred to as V2V, service, or a Vehicle-to-Pedestrian, in the following also referred to as V2P, service.

9. The method of any one of claims 1 to 8, wherein the information is an indication to indicate an interface switch.

10. A User Equipment, in the following also referred to as UE, comprising:
a control circuit (306);
a processor (308) installed in the control circuit (306); and
a memory (310) installed in the control circuit (306) and operatively coupled to the processor (308);
**characterized in that** the processor (308) is configured to execute a program code (312) stored in the memory (310) to perform the method steps as defined in any one of the preceding claims.

## Patentansprüche

1. Verfahren einer Teilnehmerausrüstung, im Folgenden auch als UE bezeichnet, aufweisend:
die UE verwendet eine PC5-Schnittstelle, um Daten für einen Dienst zu senden (1305);
**gekennzeichnet durch**:
die UE empfängt eine Information von einer Basisstation zum Anzeigen, dass die PC5-Schnittstelle nicht berechtigt ist, Daten für den Dienst zu senden (1310);
die UE sendet als Reaktion auf den Empfang der Information eine Anforderung für ein Verwenden einer Uu-Schnittstelle an die Basisstation (1315); und
die UE verwendet die Uu-Schnittstelle, um Daten für den Dienst zu senden.

2. Verfahren einer Teilnehmerausrüstung, im Folgenden auch als UE bezeichnet, aufweisend:
die UE verwendet eine Uu-Schnittstelle, um Daten für einen Dienst zu senden (1305);
**gekennzeichnet durch**:
die UE empfängt eine Information von der Basisstation zum Anzeigen, dass die Uu-Schnittstelle nicht berechtigt ist, Daten für den Dienst zu senden (1310);
die UE sendet als Reaktion auf den Empfang der Information eine Anforderung für ein Verwenden einer PC5-Schnittstelle an die Basisstation (1315); und
die UE verwendet die PC5-Schnittstelle, um Daten für den Dienst zu senden.

3. Verfahren gemäß Anspruch 1, wobei die Information eine PC5-Ressourcen-Freigabe und/oder eine Funkträgereinstellung ist, die einen Funkträger generiert, der verwendet wird, um Daten für den Dienst zu senden.

4. Verfahren gemäß Anspruch 2, wobei die Information eine PC5-Ressourcen-Zuweisung und/oder eine Funkträgerfreigabe ist, die einen Funkträger freigibt, der verwendet wird, um Daten für den Dienst zu senden.

5. Verfahren gemäß einem der Ansprüche 2 und 4, wobei die Anforderung eine Sidelink-UE-Informationsnachricht ist.

6. Verfahren gemäß einem der Ansprüche 1 bis 5, wobei die Information durch eine *RRCConnectionReconfiguration*-Nachricht oder eine Systeminformation übermittelt wird.

7. Verfahren gemäß einem der Ansprüche 1 bis 6, wobei die Anforderung eine Dienstanforderungsnachricht, die sich auf eine Schicht eines Non-Access-Stratum, im Folgenden auch als NAS bezeichnet, bezieht, oder eine Nachricht einer Funk-Ressourcen-Steuerung, im Folgenden auch als RRC bezeichnet, ist.

8. Verfahren gemäß einem der Ansprüche 1 bis 7, wobei der Dienst ein Fahrzeug-zu-Fahrzeug, im Folgenden auch als V2V bezeichnet, -Dienst oder ein Fahrzeug-zu-Fußgänger, im Folgenden auch als V2P bezeichnet, -Dienst ist.

9. Verfahren gemäß einem der Ansprüche 1 bis 8, wobei die Information eine Anweisung ist, um ein Schnittstellenumschalten anzuzeigen.

10. Teilnehmerausrüstung, im Folgenden auch als UE bezeichnet, aufweisend:
eine Steuerungsschaltung (306);
einen Prozessor (308), der in der Steuerungsschaltung (306) installiert ist; und
einen Speicher (310), der in der Steuerungsschaltung (306) installiert und betriebsbereit mit dem Prozessor (308) verbunden ist;
**dadurch gekennzeichnet, dass** der Prozessor (308) eingerichtet ist, einen in dem Speicher (310) gespeicherten Programm-Code (312) auszuführen, um die Verfahrensschritte auszuführen, wie in einem der vorstehenden Ansprüche definiert.

## Revendications

1. Procédé d'un Équipement Utilisateur, également désigné ci-après par UE, comprenant le fait :
d'utiliser, par l'UE, une interface PC5 pour transmettre des données pour un service (1305) ;
**caractérisé par** le fait :
de recevoir, par l'UE, une information à partir d'une station de base pour indiquer que l'interface PC5 n'est pas autorisée à transmettre des données pour le service (1310) ;
de transmettre, par l'UE, une demande à la station de base pour utiliser une interface Uu en réponse à la réception de l'information (1315) ; et
d'utiliser, par l'UE, l'interface Uu pour transmettre des données pour le service.

2. Procédé d'un Équipement Utilisateur, également désigné ci-après par UE, comprenant le fait :
d'utiliser, par l'UE, une interface Uu pour transmettre des données pour un service (1305) ;
**caractérisé par** le fait :
de recevoir, par l'UE, une information à partir de la station de base pour indiquer que l'interface Uu n'est pas autorisée à transmettre des données pour le service (1310) ;
de transmettre, par l'UE, une demande à la station de base pour utiliser une interface PC5 en réponse à la réception de l'information (1315) ; et
d'utiliser, par l'UE, l'interface PC5 pour transmettre des données pour le service.

3. Procédé de la revendication 1, dans lequel l'information représente une libération de ressources PC5 et/ou un établissement de support radio créant un support radio utilisé pour transmettre des données pour le service.

4. Procédé de la revendication 2, dans lequel l'information représente une attribution de ressources PC5 et/ou une libération de support radio libérant un support radio utilisé pour transmettre des données pour le service.

5. Procédé de l'une quelconque des revendications 2 et 4, dans lequel la demande est un message d'Information d'UE de Liaison Latérale.

6. Procédé de l'une quelconque des revendications 1 à 5, dans lequel l'information est acheminée par un message de Reconfiguration de Connexion RRC (*RRCConnectionReconfiguration*) ou une information système.

7. Procédé de l'une quelconque des revendications 1 à 6, dans lequel la demande est un message de demande de service relatif à une couche de Strate de Non-Accès, également désignée ci-après par NAS, ou un message de Commande de Ressources Radio, également désignée ci-après par RRC.

8. Procédé de l'une quelconque des revendications 1 à 7, dans lequel le service est un service de Véhicule à Véhicule, également désigné ci-après par V2V, ou un service de Véhicule à Piéton, également désigné ci-après par V2P.

9. Procédé de l'une quelconque des revendications 1 à 8, dans lequel l'information représente une indication pour indiquer un commutateur d'interface.

10. Équipement Utilisateur, également désigné ci-après par UE, comprenant :
un circuit de commande (306) ;
un processeur (308) installé dans le circuit de commande (306) ; et
une mémoire (310) installée dans le circuit de commande (306) et couplée de manière fonctionnelle au processeur (308) ;
**caractérisé en ce que** le processeur (308) est configuré pour exécuter un code de programme (312) stocké dans la mémoire (310) pour effectuer les étapes du procédé telles que définies dans l'une quelconque des revendications précédentes.
